# EUROPEAN PATENT APPLICATION

(11) **EP 1 826 390 A1**
(43) Date of publication of application: **29.08.2007**
(21) Application number: 07250416.0
(22) Date of filing: 31.01.2007
(51) Int. Cl.: F02K 7/10

(54) **Multipurpose gas generator ramjet/scramjet cold start system**

(30) Priority: 31.01.2006 US 344764
(71) Applicant: UNITED TECHNOLOGIES CORPORATION, Hartford, CT 06101 (US)
(72) Inventor: Donohue, James M., Glastonbury, CT 06033 (US); Guile, Roy N., Wethersfield, CT 06109 (US)
(74) Representative: Leckey, David Herbert

(57) **Abstract**

A system (10) for starting a ramjet/scramjet engine includes a gas generator (12) for lighting a combustor (30) of a ramjet/scramjet engine, for generating electrical power for vehicle subsystems (25), for pumping fuel, and for preheating the fuel. In accordance with the present invention, there is provided a method for cold starting a ramjet/scramjet engine. The method comprises the steps of using a gas generator (12) to light the combustor (30), to generate a gas product, using the gas product to generate electrical power for vehicle subsystems (25) and to pump fuel, and using the gas product to preheat liquid fuel.

## Description

### BACKGROUND OF THE INVENTION

### (1) Field of the Invention

The present invention relates to a system having a multipurpose gas generator for cold starting a ramjet/scramjet engine and a method for cold starting the ramjet/scramjet engine.

### (2) Prior Art

Liquid hydrocarbon ramjet/scramjet engines are known in the art. Prior light-off approaches for such engines are not suitable for flight vehicles and missiles where storability, safety, weight, and cost are important factors. Because ramjet/scramjet powered vehicles are still under development, emphasis has been on systems used in ground test facilities and planned for flight demonstrations where light-off approaches can utilize facility fuel heaters, large heat exchangers, air throttling, bottled gases, and pyrophorics which are generally not compatible with operational flight systems.

There is needed a system for starting up a ramjet/scramjet engine which can be used on flight vehicles and missiles.

### SUMMARY OF THE INVENTION

In accordance with the present invention, there is provided a system and method for cold start of a ramjet/scramjet engine that can be used on flight vehicles and missiles.

In accordance with the present invention, there is provided a system for starting a ramjet/scramjet engine. The system broadly comprises means for lighting the combustor, for generating electrical power for vehicle subsystems, for pumping fuel, and for preheating the fuel, said means comprising a gas generator for generating gas products which are used to generate said electrical power, to pump said fuel, and to preheat the fuel. Lighting the combustor is a principal function of the system of the present invention. In accordance with the present invention, gaseous fuel from the gas generator, such as hydrogen, ethylene, or other reactive fuel, ignites and burns when injected and mixes in the engine's combustor.

Further in accordance with the present invention, there is provided a method for starting a ramjet/scramjet engine. The method broadly comprises the steps of using a gas generator to generate a gas product, using said gas product to light the combustor, to generate electrical power for vehicle subsystems and to pump fuel, and using said gas product to preheat liquid fuel.

Other details of the multipurpose gas generator ramjet/scramjet cold start system of the present invention, as well as advantages attendant thereto, are set forth in the following detailed description and the accompanying drawings wherein like reference numerals depict like elements.

### BRIEF DESCRIPTION OF THE DRAWINGS

FIG. 1 is a schematic representation of a multipurpose gas generator ramjet/scramjet cold start system in accordance with the present invention; and
FIG. 2 is a schematic representation of a portion of a ramjet/scramjet engine.

### DETAILED DESCRIPTION OF THE PREFERRED EMBODIMENT(S)

In a fuel-cooled hydrocarbon ramjet/scramjet engine, the vaporized fuel that is generated may be used to drive a turbine which pumps fuel and generates electricity, as well as to fuel a combustor efficiently. If the ramjet/scramjet engine relies on the presence of vaporized fuel for operation, a cold start system is needed to light and run the ramjet/scramjet engine until the fuel is heated sufficiently. The present invention provides such a cold start system.

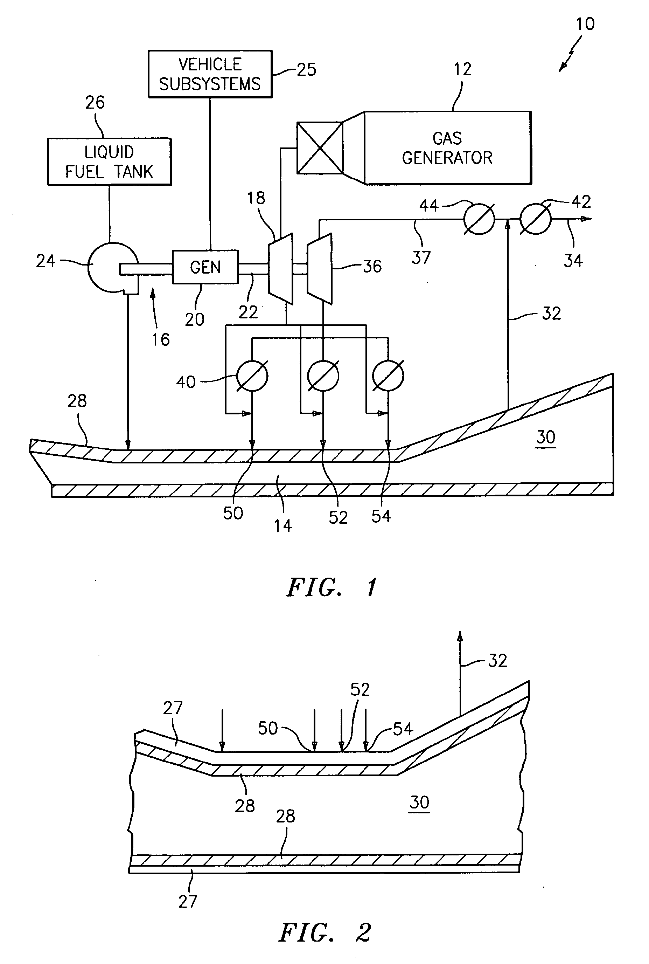

Referring now to FIGS. 1 and 2, there is shown a multipurpose gas generator ramjet/scramjet cold start system 10 that uses a gas generator 12 to perform several functions during the cold start process. The gas generator 12 may be any suitable device known in the art for providing gas that does not have to be stored in a bottle under pressure. The gas generator 12 provides a gaseous product, such as gaseous fuel, that is reactive enough to ignite when injected into the combustor 30 of the ramjet/scramjet engine 14, and run the ramjet/scramjet engine 14 as liquid fuel is preheated, and drive a turbopump/generator system 16 during the start-up process. The gas generator 12 provides the gaseous product by being ignited so that a chemical reaction generates the gas that is desired. The use of a multipurpose gas generator 12 in this manner reduces the number of components needed, thus reducing the size, weight, cost, and complexity of the system 10.

The light-off process starts by igniting the gas generator 12 and directing gas products delivered by the gas generator 12 through the input of a start turbine 18. The start turbine 18 is connected to the turbopump/generator system 16 via a drive shaft 22. The turbopump/generator system 16 includes an electric generator 20 and a fuel pump 24 both mounted on the shaft 22. The electric generator 20 is used to generate electrical energy for vehicle subsystems 25. The fuel pump 24 is connected to a liquid fuel tank 26 and to cooling passages 27 in the combustor walls 28. The fuel pump 24 may be connected to the fuel tank 26 and the cooling passages 27 using any suitable conduit system known in the art. If desired, each conduit in the conduit system may have a valve for controlling fuel flow through the conduit.

By directing gaseous products from the gas generator 12 through the start turbine 18, electrical power needed by the vehicle subsystems 25 is generated and liquid fuel is pumped through the cooling passages 27 of the combustor walls 28. The gas generator products that are used to drive the start turbine 18 preferably exit the start turbine 18 and are directed into the combustor 30 of the ramjet/scramjet engine through fuel injection sites 50, 52, and 54 so that the ramjet/scramjet engine lights and begins heating the liquid fuel coolant flowing through the passages 27. The heated liquid fuel flowing through the passages 27 may be withdrawn from the passages 27 via the line 32. At the operator's discretion, the liquid fuel thus withdrawn may be either dumped overboard via line 34 or directed via line 37 to a main turbine 36 to fuel the injectors at the sites 50, 52, and 54. As shown in FIG. 1, each line that is used to feed heated fuel to the injection sites 50, 52, and 54 may be provided with a valve 40 to control the flow of heated fuel to the injection sites 50, 52, and 54. The main turbine 36 may also be mounted to the shaft 22 and thus may be used to drive the electric generator 20 and the fuel pump 24. Each of the lines 34 and 37 may be provided with a valve 42 and 44 respectively to control the flow of heated liquid fuel through the respective line.

The gas generator 12 is preferably sized to operate until the liquid fuel is heated sufficiently to be able to drive the turbine 36 and run the combustor 30 on its own. While only one gas generator 12 has been illustrated in the cold start system, more than one gas generator 12 may be provided if desired.

It is desirable to keep the size of each gas generator 12 as small as possible since component volume and weight have a significant impact on a flight system. Hot gas generator products could be used to help preheat the liquid hydrocarbon fuel, reducing the duration of the cold start process and the size of the gas generator required. Gas produced by the gas generator can be used to atomize, mix and pilot cold liquid fuel allowing the ramjet/scramjet engine to be operated primarily on liquid fuel during start-up, significantly reducing the size of the gas generator needed and/or the time to get to full thrust.

In addition to providing a cold start system, the availability of a more reactive fuel could be used to enhance the performance and operability limits of the ramjet/scramjet engine. Injection of the gas generator products with the primary hydrocarbon fuel could enhance fuel/air mixing, reaction rates and combustion efficiency of the engine, even after the cold start process has been completed. A larger gas generator 12 may be used to allow gas to flow for a longer duration of time. The more reactive fuel could also allow the ramjet/scramjet engine to operate at lower flight Mach numbers and/or lower combustor pressures.

As noted before, the use of a multipurpose gas generator 12 reduces the number of components needed that reduces the size, weight, cost, and complexity of the system. Preheating the liquid fuel by running the combustor with start gas eliminates the use of a separate heat exchanger for preheating. Utilizing energy stored in the gas generator 12 to pump the fuel is a lighter weight, smaller volume, lower cost approach compared to an electric pump/battery system. Use of a reactive start gas to light the engine is more suitable for a flight vehicle than a throttling approach used in ground test facilities that adds weight and can cause engine unstart. The use of a gas generator 12 to supply start gas instead of pressurized bottled gas is a safer and more reliable long term storage approach.

## Claims

1. A system for starting a ramjet/scramjet engine comprising means for lighting a combustor (30) of said ramjet/scramjet engine, for generating electrical power for vehicle subsystems (25), for pumping fuel, and for preheating the fuel, said means comprising a gas generator (12) for generating gas products which are used to generate said electrical power, to pump said fuel, and to preheat the fuel.

2. The system according to claim 1, wherein said generating means includes a start turbine (18) for receiving gas products from said gas generator means (12).

3. The system according to claim 2, wherein said generating means further includes an electrical generator (20) connected to said start turbine (18) to generate said electrical power.

4. The system according to claim 2 or 3, wherein said generating means further includes a fuel pump (24) driven by said start turbine (18) for pumping said fuel.

5. The system according to claim 4, wherein said ramjet/scramjet engine has a plurality of walls (28) and fuel exiting said fuel pump (24) being supplied to cooling passages (27) in said walls.

6. The system according to claim 5, further comprising means for supplying gas products exiting said start turbine (18) to said combustor (30) to light the combustor and heat fuel in said cooling passages (27).

7. The system according to claim 6, further comprising means for withdrawing heated fuel from said cooling passages (27) and using said heated fuel to drive a main turbine (36).

8. The system according to claim 7, further comprising means for supplying heated fuel exiting said main turbine (36) to said cooling passages (27).

9. The system according to claim 8, further comprising means for controlling the amount of heated fuel being supplied to said cooling passages (27).

10. The system according to any of claims 6 to 9, further comprising means for withdrawing heated fuel from said cooling passages (27) and for dumping said heated fuel overboard.

11. A method for starting a ramjet/scramjet engine comprising the steps of using a gas generator (12) to generate a gas product, using said gas product to light a combustor section (30) of said ramjet/scramjet engine, generate electrical power for vehicle subsystems (25) and to pump fuel, and using said gas product to preheat liquid fuel.

12. The method according to claim 11, further comprising providing a start turbine (18), an electrical generator (20) driven by said start turbine (18), and a fuel pump (24) driven by said start turbine (18), and wherein the step of using said gas to generate electrical power and to pump fuel comprises supplying said gas product to an inlet of said start turbine (18) to drive said start turbine (18) and thereby said electrical generator (20) and fuel pump (24).

13. The method according to claim 12, further comprising directing gas product exiting said start turbine (18) into a combustor portion (30) of said ramjet/scramjet engine.

14. The method of claim 12 or 13, further comprising pumping said fuel into cooling passages (27) in at least one combustor wall (28) and heating said fuel in said cooling passages (27) with said gas product produced by said gas generator (12).

15. The method of claim 14, further comprising withdrawing heated fuel from said cooling passages (27) and dumping said heated fuel overboard.

16. The method of claim 14 or 15, further comprising providing a main turbine (36) for driving said electrical generator (20) and said fuel pump (24) and driving said main turbine (36) with said heated fuel withdrawn from said cooling passages (27).

17. The method of claim 16, further comprising supplying heated fuel to a combustor portion (30) of said ramjet/scramjet engine.

18. The method of claim 17, further comprising providing at least one heated fuel injection site (50,52,54) and supplying said heated fuel to said combustor portion (30) via said at least one heated fuel injection site (50,52,54).

19. The method of claim 17, further comprising providing a plurality of heated fuel injection sites (50,52,54) and supplying said heated fuel to said combustor portion (30) via said plurality of heated fuel injection sites (50,52,54).
